# EUROPÄISCHE PATENTSCHRIFT

(11) **EP 1 695 788 B1**
(45) Veröffentlichungstag und Bekanntmachung des Hinweises auf die Patenterteilung: **06.04.2011**
(21) Anmeldenummer: 05004176.3
(22) Anmeldetag: 25.02.2005
(51) Int. Cl.: B23K 26/14

(54) **Verfahren zum Spülen von Leitungen und/oder Hohlräumen einer Laserbearbeitungsmaschine**
Process for spooling the conduits and/or the hollow spaces of a laser machining machine
Procédé de rinçage des conduits et/ou de l'espace creux d'une machine d'usinage au laser

(43) Veröffentlichungstag der Anmeldung: 30.08.2006
(73) Patentinhaber: TRUMPF Werkzeugmaschinen GmbH + Co. KG, 71254 Ditzingen (DE)
(72) Erfinder: Lambert, Martin, 71404 Korb (DE); Mienhardt, Uwe, 70825 Korntal-Münchingen (DE)
(74) Vertreter: Kohler Schmid Möbus

(56) Entgegenhaltungen:
- EP-A- 0 533 387
- DE-C1- 3 927 451
- PATENT ABSTRACTS OF JAPAN Bd. 2000, Nr. 23, 10. Februar 2001 (2001-02-10) & JP 2001 150172 A (KOIKE SANSO KOGYO CO LTD), 5. Juni 2001 (2001-06-05)

## Beschreibung

Die Erfindung betrifft ein Verfahren zum Spülen von Leitungen und/oder Hohlräumen einer Laserbearbeitungsmaschine mit einem entsprechenden Gas mit den Merkmalen des Oberbegriffs des Anspruchs 1.

Das Laserschneiden wird durch Hinzufügen eines Gases unterstützt. Als Schneidgase werden Sauerstoff, Stickstoff, Argon oder Luft eingesetzt. Je nach Laserbearbeitung kommen unterschiedliche Gase zum Einsatz.

Beim Gaswechsel muss das bislang verwendete Gas möglichst vollständig ausgetrieben werden bzw. entweichen und durch ein anderes Gas ersetzt werden, weil sich Gasreste des zuerst eingesetzten Gases schädlich auf die nachfolgende Laserbearbeitung auswirken können.

Durch die JP2001150172 wird vorgeschlagen, die Düse des Laserbearbeitungskopfs vor dem Gaswechsel zu evakuieren. Dies ist aber aufwändig und erfordert zusätzliche Einrichtungen wie beispielsweise Pumpen.

Es ist auch bekannt, die Spülzeit beim kontinuierlichen Spülen so lange zu wählen, bis kein Fremdgas mehr im Prozessgas enthalten ist. Die bisherigen Spülzeiten sind aber sehr lang. Offensichtlich stellt sich bei konstant strömendem Gas in einzelnen Bereichen des Gasweges zwischen Gasventil und Schneiddüse nur eine geringe Strömung ein, sodass ein schnelles vollständiges Austreiben des zuvor eingesetzten Gases nicht möglich ist. Zu kurze Spülzeiten verursachen Einbußen bei der Prozessqualität, zu lange Spülzeiten verringern die Produktivität bzw. verursachen unnötige Kosten durch Gasverbrauch.

Der Anmelder hat sich die Aufgabe gestellt, das Spülen von Leitungen und/oder Hohlräumen einer Laserbearbeitungsmaschine mit einem entsprechenden Gas hinsichtlich der Qualität und des erforderlichen Zeitaufwands zu verbessern.

Diese Aufgabe wird durch ein Verfahren zum Spülen von Leitungen und/oder Hohlräumen einer Laserbearbeitungsmaschine mit den Merkmalen des Anspruchs 1. Gegenüber dem reinen Spülen mit dem als zweites einzusetzenden Gas erhält man in wesentlich kürzerer Zeit ähnliche Reinheitsgrade. Heutige Spülzeiten führen bei ungünstigen Voraussetzungen zu unvollständigem Austreiben des zuvor eingesetzten Prozessgases. Tatsächlich würden unbefriedigend lange Spülzeiten benötigt, um die erforderliche Gasreinheit zu erhalten. Vergleichbare Gasreinheitsgrade wie bisher können durch das erfindungsgemäße Spülen mit einer kürzeren Gesamtdauer erreicht werden. Weiterhin wird Spülgasverbrauch durch die Erfindung reduziert.

Die diskontinuierliche Zuführung von einem Spülgas kann in einfacher bevorzugter technischer Umsetzung dadurch erfolgen, dass mehrere Gasdruckstöße hintereinander durchgeführt werden.

Der Reinigungseffekt wird dadurch unterstützt, dass das zunächst zur Unterstützung der Laserbearbeitung vorgesehene Gas in den Leitungen und/oder Hohlräumen expandieren kann. Dies führt in der Regel zu Atmosphärendruck in den Leitungen und/oder Hohlräumen.

Zum Erreichen einer effizienten Spülung in Leitungen oder Hohlräumen mit kleinem Durchmesser wird vorgeschlagen, je kleiner der Durchmesser der Laserbearbeitungsdüse ist, um so mehr Gasdruckstöße durchzuführen.

Ein Ausführungsbeispiel der Erfindung ist in der Zeichnung schematisch dargestellt und wird nachfolgend mit Bezug zur Figur der Zeichnung näher erläutert. Es zeigt:
- **Figur 1**: eine Laserbearbeitungsanlage zum Laserschneiden;
- **Figur 2**: eine Anordnung zum Spülen einer Gaszuführung und eines Laserbearbeitungskopfs der Laserbearbeitungsanlage mit mindestens einem Gas;
- **Figur 3**: Druckverläufe beim Spülen mithilfe der Anordnung gemäß Figur 2.

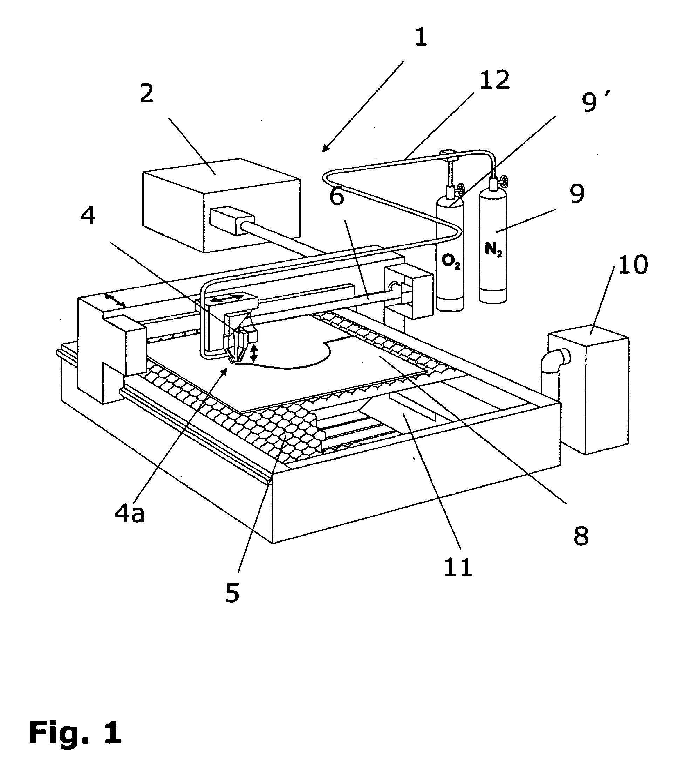

Aus der **Figur 1** ist der Aufbau einer Laserbearbeitungsanlage **1** zum Laserschneiden mit einem CO₂-Laser **2,** einem Laserbearbeitungskopf **4** (Laserbearbeitungsdüse **4a**) und einer Werkstückauflage **5** ersichtlich. Ein erzeugter Laserstrahl **6** wird mithilfe von Umlenkspiegeln zum Laserbearbeitungskopf **4** geführt und mithilfe von Spiegeln auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden, und die Schmelze muss ausgeblasen werden. Der Einstechvorgang kann schnell (d.h. mit voller Laserleistung) oder langsam (über eine sog. "Rampe") erfolgen.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase und/oder anwendungsspezifische Gase aus Gasbehältern **9**, **9**' können Sauerstoff, Stickstoff, Druckluft eingesetzt werden. Welches Gas letztendlich verwendet wird, ist davon abhängig, welche Materialien geschnitten und welche Qualitätsansprüche an das Werkstück gestellt werden.

Beim Schneiden mit Sauerstoff wird in der Regel mit einem Gasdruck von maximal 6 bar gearbeitet. Dort, wo der Laserstrahl **6** auf das Blech 8 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden. Beim Oxidationsvorgang (exotherme Reaktion) wird zusätzlich Energie frei, die den Schneidprozess begünstig. In den Materialdicken, bei welchen für das Sauerstoffschneiden und das Stickstoff-Hochdruckschneiden dieselbe Laserleistung verwendet werden kann, ist es bei einer Verwendung von Sauerstoff als Schneidgas möglich, mit deutlich höheren Schneidgeschwindigkeiten zu arbeiten oder höhere Materialdicken zu trennen, als es beim Einsatz von Stickstoff der Fall wäre.

Beim prozessbedingten Gaswechsel der Schneidgase und/oder anwendungsspezifischer Gase muss das bislang verwendete Gas ausgetrieben werden bzw. entweichen und durch das anschließend einzusetzende Gas ersetzt werden. Hierbei wirken sich Gasreste des zuerst eingesetzten Gases schädlich auf die nachfolgende Laserbearbeitung aus. Daher ist beim Prozessgaswechsel das bislang eingesetzte Gas möglichst vollständig auszutragen.

Gemäß der Erfindung soll der Spülvorgang diskontinuierlich durchgeführt werden. Zunächst wird zum Spülen einer Leitung **12,** des Laserbearbeitungskopfs **4** und sonstiger Hohlräume ein erster kurzer Gasdruckstoß in die Leitung 12, in den Laserbearbeitungskopf 4 und in die sonstigen Hohlräume durchgeführt. Es wird Gas mit einem Gasdruck zugeführt, der höher ist als der Gasdruck in der Leitung 12, im Laserbearbeitungskopf **4**, in den sonstigen Hohlräumen oder in der Umgebung. Anschließend expandiert das Gas in der Leitung 12, im Laserbearbeitungskopf **4** und in den sonstigen Hohlräumen und aus dem Laserbearbeitungskopf **4**. Es kommt zur Bildung einer Gasmischung aus Restgas und Spülgas in der Leitung 12, im Laserbearbeitungskopf 4 und in den sonstigen Hohlräumen unter näherungsweise Atmosphärendruck. Mit dem zweiten und jedem weiteren Gasdruckstoß wird der Anteil des Restgases in der Gasmischung weiter reduziert. Die Gasmischung strömt dann wieder bis auf Atmosphärendruck aus. Nach mehreren Gasdruckstößen und mehrmaligem Expandieren und Ausströmen ist in der Leitung 12, im Laserbearbeitungskopf 4 und in den sonstigen Hohlräumen nahezu kein Restgas oder Fremdgas mehr enthalten. Das Gas der ersten Laserbearbeitung wurde nahezu vollständig durch ein anderes Gas ersetzt.

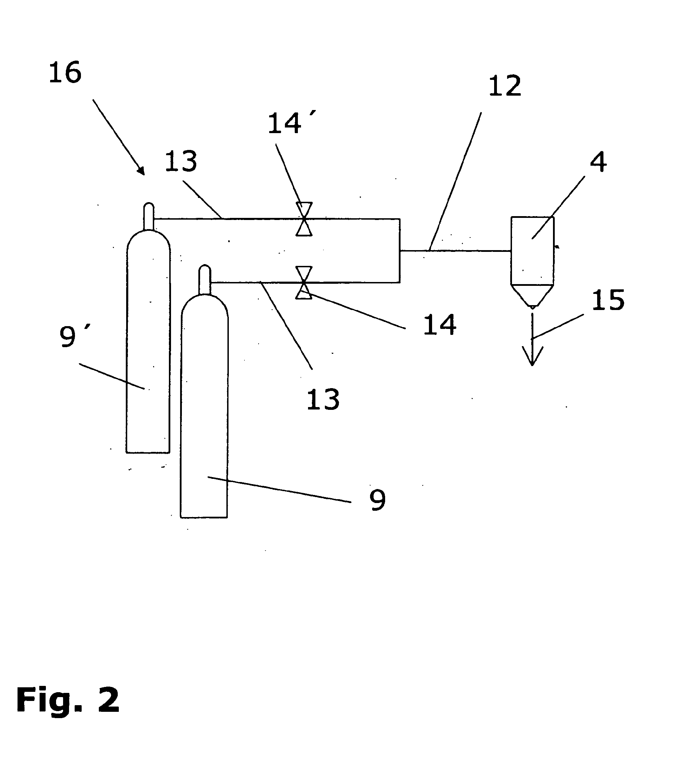

**Figur 2** schematisiert eine Anordnung **16** zum Spülen der Leitung 12, des Laserbearbeitungskopfs **4** und der sonstigen Hohlräume. Von den Gasbehältern 9, 9' gehen Leitungen **13** zu Druckregelventilen **14, 14'** aus, welche die Gaszuführung zu der Leitung 12, zum Laserbearbeitungskopf 4 und zu den sonstigen Hohlräumen steuern. Als Alternative zu Druckregelventilen können auch einfache Ventile in Verbindung mit Druckminderern eingesetzt werden. Mithilfe eines ersten Druckregelventils 14 wird vor dem Gaswechsel das zuerst eingesetzte Gas aus dem Gasbehälter 9 abgeschaltet. Dabei expandiert das in den Leitungen 12, im Laserbearbeitungskopf 4 und in den sonstigen Hohlräumen verbleibende Gas näherungsweise bis auf Umgebungsdruck. Das anschließend einzusetzende Gas wird nun über das zweite Druckregelventil 14'angewählt. Die Leitung 12, der Laserbearbeitungskopf 4 und die sonstigen Hohlräume, d.h. der komplette Gasweg, werden möglichst mit hohem Druck befüllt. Der in der Leitung 12, im Laserbearbeitungskopf 4 und in den sonstigen Hohlräumen verbleibende Gasrest wird dadurch stark verdünnt. Der Füllvorgang dauert typisch ca. 0,5 s. Anschließend wird das Gas wieder abgeschaltet, und das Gas in der Leitung 12 und im Laserbearbeitungkopf 4 expandiert erneut näherungsweise bis auf Umgebungsdruck und strömt in Pfeilrichtung **15** aus. Nach mehrmaligem Befüllen des Gasweges und anschließender Expansion ist der notwendige Reinheitsgrad des Bearbeitungsgases in der Leitung 12, im Laserbearbeitungskopf 4 und in den sonstigen Hohlräumen erreicht, und die Laserbearbeitung kann fortgeführt werden.

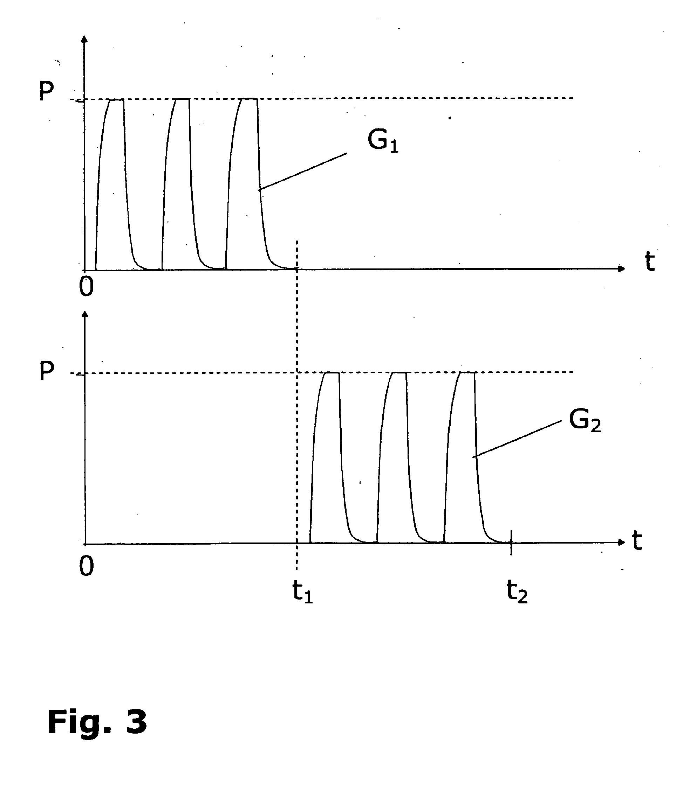

**Figur 3** zeigt die aus der Handhabung der Anordnung nach Figur 2 resultierenden Druckverläufe. Der in Figur 3 obere Druckverlauf entspricht einer ersten Spülung mit einem Gas G₁ bis zu einem Zeitpunkt t₁. Es werden insgesamt drei Gasdruckstöße durchgeführt. Nach jedem Gasdruckstoß mit einem Gasdruck P expandiert das Gas G₁. Der in Figur 3 untere Druckverlauf entspricht einer ersten Spülung mit einem Gas G₂ ab dem Zeitpunkt t₁. Es werden wiederum insgesamt drei Gasdruckstöße durchgeführt. Nach jedem Gasdruckstoß mit einem Gasdruck P expandiert auch das Gas G₂. Es versteht sich von selbst, dass eine beliebige Anzahl von Gasdruckstößen möglich ist, um die Erfindung auszuführen. Je kleiner der Durchmesser der Laserbearbeitungsdüse ist, je mehr Gasdruckstöße sind sinnvoll, um eine ausreichende Spülung zu erreichen.

### BEZUGSZEICHENLISTE

- 1: Laserbearbeitungsanlage
- 2: Laser
- 3:
- 4: Laserbearbeitungskopf
- 4a: Düse
- 5: Werkstückauflage
- 6: Laserstrahl
- 7:
- 8: Werkstück
- 9: Gasbehälter
- 9': Gasbehälter
- 10: Absaugkammer
- 11: Absaugeinrichtung
- 12: Leitung
- 13: Leitung
- 14: Druckregelventil
- 14': Druckregelventil
- 15: Strömungsrichtung
- 16: Spülanordnung

## Patentansprüche

1. Verfahren zum Spülen von Leitungen und/oder Hohlräumen einer Laserbearbeitungsmaschine bei einem Prozessgaswechsel mit einem entsprechenden Gas, wobei das zum Spülen vorgesehene Gas mit einem Druck zugeführt wird, welcher höher ist als der herrschende Druck in den Leitungen und/oder Hohlräumen, und nach der Zuführung expandieren kann, **dadurch gekennzeichnet, dass** das zum Spülen vorgesehene Gas bei unterbrochener Laserbearbeitung diskontinuierlich zugeführt wird.

2. Verfahren nach Anspruch 1, **dadurch gekennzeichnet, dass** mehrere Gasdruckstöße hintereinander durchgeführt werden.

3. Verfahren nach Anspruch 1 oder 2, **dadurch gekennzeichnet, dass** zunächst zur Unterstützung der Laserbearbeitung vorgesehene Gas in den Leitungen und/oder Hohlräumen expandieren kann.

4. Verfahren nach einem oder mehreren der vorhergehenden Ansprüche, **dadurch gekennzeichnet, dass** je kleiner der Durchmesser der Laserbearbeitungsdüse ist, um so mehr Gasdruckstöße durchgeführt werden.

## Claims

1. Method for flushing lines and/or cavities of a laser processing machine with a corresponding gas in case of a processing gas change, wherein the gas provided for flushing is supplied at a pressure which is higher than the prevailing pressure in the lines and/or cavities, and can expand after supply, **characterized in that** the gas provided for flushing is discontinuously supplied when laser processing is interrupted.

2. Method according to claim 1, **characterized in that** several gas pressure impulses are performed in succession.

3. Method according to claim 1 or 2, **characterized in that** the gas initially provided for assisting laser processing can expand in the lines and/or cavities.

4. Method according to one or more of the preceding claims, **characterized in that** the smaller the diameter of the laser processing nozzle, the larger the amount of gas pressure impulses that are performed.

## Revendications

1. Procédé de rinçage de conduits et/ou de cavités d'une machine d'usinage au laser lors du remplacement d'un gaz de processus par un gaz correspondant, sachant que le gaz, prévu pour le rinçage, est délivré sous une pression supérieure à la pression régnant dans les conduits et/ou les cavités, et peut subir une expansion à l'issue de la délivrance, **caractérisé par le fait que** le gaz prévu pour le rinçage est délivré en mode discontinu à l'état d'interruption de l'usinage au laser.

2. Procédé selon la revendication 1, **caractérisé par le fait que** plusieurs à-coups de pression gazeuse sont engendrés en succession.

3. Procédé selon la revendication 1 ou 2, **caractérisé par le fait que** du gaz, prévu pour assister l'usinage au laser dans un premier temps, peut subir une expansion dans les conduits et/ou les cavités.

4. Procédé selon l'une ou plusieurs des revendications précédentes, **caractérisé par le fait que** le nombre des à-coups de pression gazeuse engendrés est d'autant plus grand que le diamètre de la buse d'usinage au laser est modeste.
